# FASCICULE DE BREVET EUROPEEN

(11) **EP 3 013 616 B1**
(45) Date de publication et mention de la délivrance du brevet: **01.11.2017**
(21) Numéro de dépôt: 14735623.2
(22) Date de dépôt: 13.06.2014
(51) Int. Cl.: B60K 1/04, H01M 10/613, H01M 10/625, H01M 10/617, H01M 10/6563, H01M 10/663

(54) **CONDUIT DE REFROIDISSEMENT**
KÜHLKANAL
COOLING CONDUIT

(30) Priorité: 28.06.2013 FR 1356310
(43) Date de publication de la demande: 04.05.2016
(73) Titulaire: Renault S.A.S., 92100 Boulogne-Billancourt (FR)
(72) Inventeur: CANO-RAMIREZ, Maria-Lourdes, F-92000 Nanterre (FR)
(86) Numéro de dépôt international: PCT/FR2014/051459
(87) Numéro de publication internationale: WO 2014/207341

(56) Documents cités:
- DE-A1-102011 015 337
- JP-A- 2000 243 461
- KR-A- 20050 070 727
- US-A- 5 490 572
- US-A1- 2006 093 901

## Description

La présente invention concerne un conduit de refroidissement. Elle s'applique notamment, mais pas exclusivement, au refroidissement des batteries des véhicules automobiles électriques ou hybrides.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle ») sont aujourd'hui considérés comme la solution la plus prometteuse pour diminuer les émissions de CO₂.

Différentes technologies de stockage de l'énergie électrique ont été testées dans les dernières années afin de répondre aux besoins des EV. Il apparaît aujourd'hui que les batteries à cellules lithium-ion (Li-ion) sont celles qui permettent d'obtenir le meilleur compromis entre la densité de puissance, qui favorise les performances en termes d'accélération notamment, et la densité d'énergie, qui favorise l'autonomie. Cependant, l'utilisation de cette technologie Li-ion pour constituer des batteries de traction pour EV n'est pas sans poser de nombreuses difficultés, notamment si l'on considère les niveaux de tension nécessaires, de l'ordre de 400 volts (V), ainsi que les niveaux de température générés. En effet, la migration des ions lithium entre les électrodes d'une cellule Li-ion, que ce soit à la décharge lorsque le véhicule roule comme à la charge lorsqu'il est branché à un réseau de distribution électrique, est une réaction exothermique : les cellules voient donc naturellement leur température augmenter. Mais il faut tout de même contrôler cette montée en température des cellules, car leurs performances, notamment en termes de puissance et d'autonomie, ainsi que leur durée de vie, dépendent des conditions d'utilisation, notamment de la température de fonctionnement. Les cellules, qui sont en plus enfermées dans une enceinte quasiment hermétique communément appelée « pack » ou « pack batterie », doivent donc être maintenues dans une plage de température de fonctionnement sensiblement optimale, à la charge comme à la décharge. Notamment, si la température est trop élevée, c'est la durée de vie des cellules qui sera réduite. Il s'agit là d'une problématique à laquelle la présente invention se propose de répondre.

Une solution classique est le refroidissement par convexion forcée, comme par exemple la solution décrite dans le brevet EP1031451 : le pack batterie est située sous le plancher du véhicule, il est refroidi par un dispositif comprenant un conduit d'entrée pour introduire de l'air frais dans le pack, un conduit de sortie pour évacuer hors du pack l'air réchauffé et un ventilateur agencé à mi-longueur du conduit de sortie pour forcer la circulation de l'air dans le pack par aspiration. Un inconvénient de cette solution est que, en forçant par aspiration le débit du flux d'air dans le pack, les phénomènes de turbulence sont amplifiés et nuisent à l'homogénéité du débit du flux d'air dans le pack. Une conséquence directe est l'hétérogénéité du refroidissement dans le pack : en fonction de leur emplacement dans le pack, certaines cellules sont mieux refroidies que d'autres, le débit du flux d'air qu'elles reçoivent variant avec leur emplacement. Une conséquence indirecte est que les cellules voient leur performances varier de manière hétérogène à court terme, puisque les performances d'une cellule, tant en termes de puissance que d'autonomie, dépendent de sa température. Une autre conséquence indirecte est que les cellules voient leur durée de vie évoluer de manière hétérogène à long terme, les cellules moins bien refroidies vieillissant plus vite. Il s'agit là d'une problématique à laquelle la présente invention se propose de répondre.

La demande de brevet DE 10 2011 015 337 A1 divulgue un procédé et un dispositif pour contrôler la température d'une batterie comprenant les caractéristiques du préambule de la revendication 1 qui présentent les mêmes inconvénients liés à l'hétérogénéité du refroidissement que le brevet EP1031451.

L'invention a notamment pour but de résoudre les inconvénients précités, notamment d'homogénéiser le débit du flux d'air dans le pack batterie. A cet effet, l'invention a pour objet un conduit pour le refroidissement d'un élément chauffant. Il comporte une bouche d'entrée pour l'entrée d'un flux d'air frais et une pluralité de canaux de refroidissement, le flux d'air frais se divisant dans lesdits canaux en une pluralité de flux d'air pour y collecter des calories produites par l'élément chauffant, ainsi qu'une bouche de sortie pour la sortie d'un flux d'air réchauffé, le flux d'air réchauffé résultant de la fusion de la pluralité de flux d'air après collecte des calories. Le conduit comporte, disposés dans la bouche de sortie, des moyens pour s'opposer à la sortie hors des canaux de refroidissement d'au moins un des flux d'air parmi la pluralité.

Dans un mode de réalisation préférentiel, les moyens pour s'opposer à la sortie des flux d'air hors des canaux de refroidissement peuvent être disposés, dans la bouche de sortie, en regard des sorties des canaux situées, relativement aux autres sorties de canaux, les plus proches de l'ouverture de sortie de la bouche de sortie.

Avantageusement, les moyens pour s'opposer à la sortie des flux d'air hors des canaux de refroidissement peuvent inclure des déflecteur d'air s'étendant, dans la bouche de sortie, en regard des sorties des canaux sur des longueurs prédéterminées, de manière à guider lesdits flux d'air vers l'ouverture de sortie de la bouche de sortie.

Avantageusement, la longueur des déflecteurs peut diminuer lorsque leurs distances à l'ouverture de la bouche de sortie augmentent.

Avantageusement, les déflecteurs peuvent être courbés, de telle sorte que leurs courbures s'opposent à la sortie des flux d'air hors des canaux de refroidissement.

Avantageusement, le rayon de courbure des déflecteurs peut augmenter lorsque leurs distances à l'ouverture de la bouche de sortie augmentent.

La présente invention a également pour objet un pack batterie comportant une pluralité de cellules électrochimiques de stockage d'énergie constituant un élément chauffant, ce pack comportant un conduit selon l'une quelconque des revendications précédentes pour le refroidissement de la pluralité de cellules.

La présente invention a encore pour principal avantage que l'ajout de déflecteurs selon l'invention est possible pour toute géométrie de conduit.

D'autres caractéristiques et avantages de l'invention apparaîtront à l'aide de la description qui suit faite en regard de dessins annexés qui représentent :
- la figure 1, par une vue de dessus, un exemple de conduit d'air selon l'invention pour refroidir un pack batterie ;
- la figure 2, par une vue en perspective, le même exemple de conduit d'air selon l'invention ;
- les figures 3a et 3b, par des vues en perspective, respectivement la répartition de la température dans un pack batterie sans conduit d'air selon l'invention et la répartition de la température dans le pack batterie comportant le conduit d'air selon l'invention illustré aux figures 1 et 2.

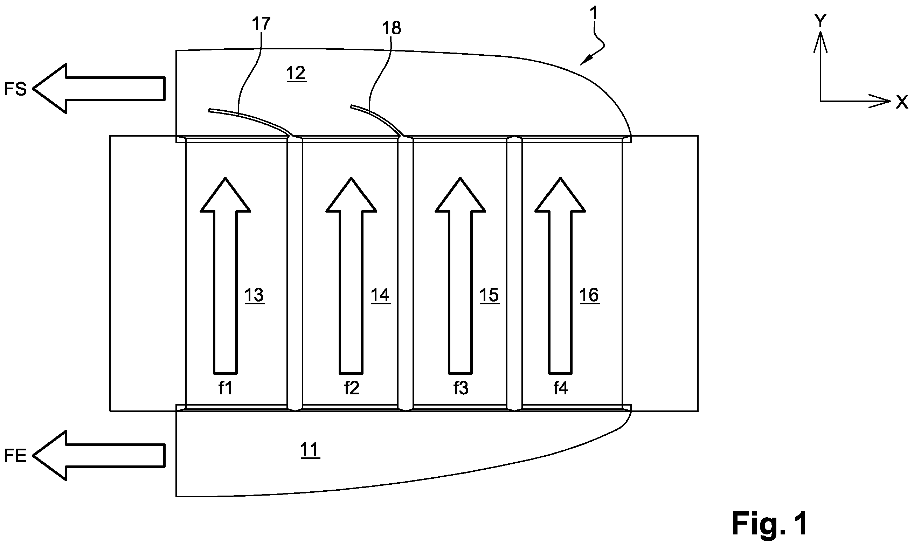

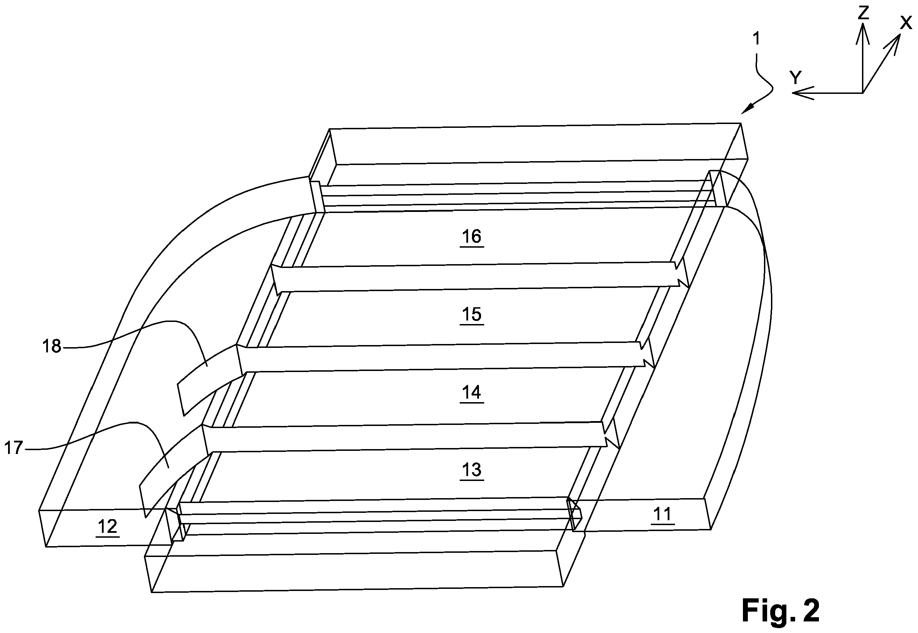

Les figures 1 et 2 illustrent schématiquement, par une vue de dessus et une vue en perspective respectivement, un exemple de conduit d'air 1 selon l'invention pour le refroidissement d'un pack batterie. Il est fait d'un matériau ayant une conductivité thermique élevée, un alliage métallique par exemple, ou encore un matériau plastique. Il est destiné à être disposé dans le pack batterie, non représenté sur les figures, qui peut être fait d'un matériau plastique. Le conduit d'air 1 comprend une bouche 11 pour l'entrée d'un flux d'air frais FE. L'ouverture d'entrée de la bouche 11 est destinée à être emmanchée dans une ouverture pratiquée dans le pack batterie, afin de permettre l'entrée de l'air dans le pack via la bouche 11. Le conduit d'air 1 comprend également une bouche 12 pour la sortie d'un flux d'air réchauffé FS. L'ouverture de sortie de la bouche 12 est destinée à être emmanchée dans une autre ouverture pratiquée dans le pack batterie, afin de permettre la sortie de l'air hors du pack via la bouche 12. Le conduit d'air 1 comprend enfin des canaux 13, 14, 15 et 16 qui relient la bouche d'entrée 11 à la bouche de sortie 12.

Ainsi, dans l'exemple des figures 1 et 2, le flux d'air frais FE entre dans le pack via la bouche 11 en suivant une direction X sensiblement horizontale. Le flux FE se divise alors en quatre flux f1, f2, f3 et f4 qui circulent dans les canaux 13, 14, 15 et 16 respectivement en suivant une direction Y orthogonale à X dans le plan horizontal. Les flux f1, f2, f3 et f4 absorbent des calories au contact des parois des canaux 13, 14, 15 et 16 respectivement, les cellules Li-ion, non représentées sur les figures, étant disposées à plat ou sur champs au contact des parois des canaux 13, 14, 15 et 16, au-dessus ou en dessous du conduit 1. Une fois réchauffés par l'absorption des calories, les quatre flux f1, f2, f3 et f4 fusionnent pour former le flux d'air réchauffé FS. Le flux d'air FS quitte le pack via la bouche 12 en suivant la direction opposée à X.

Selon l'invention, des déflecteurs courbés 17 et 18 sont disposés dans la bouche de sortie 12, en regard de l'ouverture de sortie des canaux 13 et 14 respectivement. Les déflecteurs courbés 17 et 18 ont principalement pour fonction de privilégier le passage de l'air par les canaux 15 et 16 au détriment des canaux 13 et 14, ceci en s'opposant à la sortie des flux d'air f1 et f2 hors des canaux 13 et 14 respectivement. En effet, en s'opposant à la sortie des flux d'air f1 et f2 hors des canaux 13 et 14 respectivement, les déflecteurs 17 et 18 créent une surpression dans les canaux 13 et 14, cette surpression ayant pour conséquence que l'air formant le flux d'entrée FE s'oriente préférentiellement vers les canaux 15 et 16 où la pression est plus basse. Les déflecteurs courbés 17 et 18 ont également pour fonction, une fois les flux f1 et f2 sortis « en force » des canaux 13 et 14 respectivement, de les guider vers l'ouverture de sortie de la bouche 12, afin de limiter leur effet sur l'augmentation pression dans la bouche de sortie 12, car cette augmentation de pression s'oppose à la libre sortie des flux f4 et f3 dans la bouche 12 et donc augmente la pression dans les canaux 15 et 16.

Ainsi, un principe de l'invention est de favoriser le passage de l'air frais dans les canaux les plus éloignés de l'ouverture d'entrée de la bouche 11. Ainsi, dans un premier temps, le passage de l'air est favorisé dans les canaux 16 et 15 au détriment du passage de l'air dans les canaux 13 et 14, ceci en disposant des déflecteurs en sortie des canaux 13 et 14, à savoir les déflecteurs 17 et 18 respectivement, mais pas en sortie des canaux 15 et 16. Dans un deuxième temps, le passage de l'air est favorisé dans le canal 14 au détriment du passage de l'air dans le canal 13, le déflecteur 17 disposé en sortie du canal 13 étant plus long et de rayon de courbure plus grand que le déflecteur 18 disposé en sortie du canal 14. En effet, le déflecteur 17 étant plus long et de rayon de courbure plus grand, il produit un effet « bouchon » plus important que le déflecteur 18 et provoque donc une surpression plus importante dans le canal 13 que dans le canal 14, et donc l'air issu du flux d'entrée FE ne s'étant engouffré ni dans le canal 16 ni dans le canal 15 s'oriente préférentiellement vers le canal 14 plutôt que vers le canal 13. C'est donc d'abord la présence ou l'absence de déflecteur en sortie d'un canal, puis la géométrie des déflecteurs qui détermine l'ordre de préférence parmi les canaux 13 à 16. Les déflecteurs forment, avec la direction Y suivie par les flux f1, f2, f3 et f4 dans les canaux 13 à 16 respectivement, un angle inférieur à 90°, angle théorique qui correspond à une fermeture totale des canaux 13 à 16, et supérieur à 0°, angle théorique qui correspond à une ouverture totale des canaux 13 à 16. Le rayon de courbure et la longueur des déflecteurs dépendent de chaque cas, notamment de la place disponible dans le conduit.

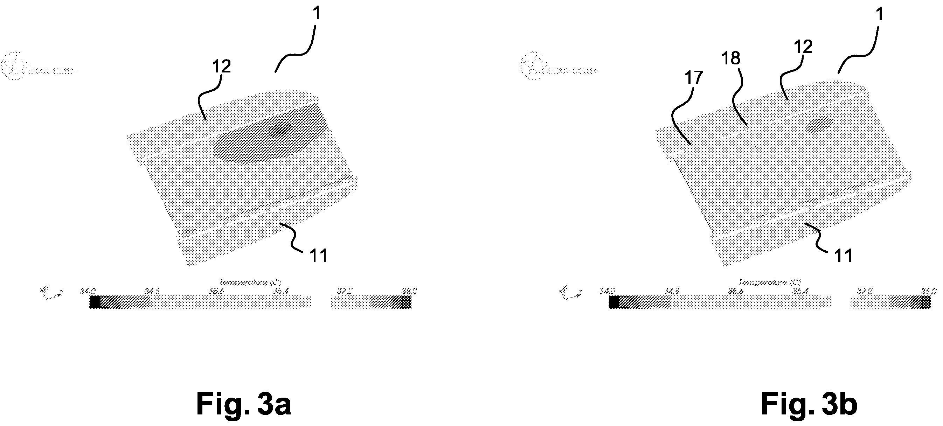

Les figures 3a et 3b illustrent par des vues en perspective, respectivement la répartition de la température dans un pack batterie sans conduit d'air selon l'invention et la répartition de la température dans le pack batterie comportant le conduit d'air 1 selon l'invention déjà illustré aux figures 1 et 2 qui précèdent. En effet, la demanderesse a pu mesurer que l'invention permet de passer d'une dispersion de 40% du débit du flux d'air dans le conduit illustré à la figure 3a, c'est-à-dire que le débit est 40% plus élevé dans certaines zones que dans d'autres, à une dispersion de débit de seulement 17% dans le conduit 1 encore illustré à la figure 3b. Ainsi, les répartitions de température illustrées aux figures 3a et 3b montrent non seulement que l'invention permet de passer d'une température maximum locale de l'ordre de 37,7°C à une température maximum locale de l'ordre de l'ordre de 37,4°C, mais également à une répartition bien plus homogène des températures.

## Revendications

1. Conduit (1) pour le refroidissement d'un élément chauffant, le conduit comportant :
• une bouche d'entrée (11) pour l'entrée d'un flux d'air frais (FE) ;
• une pluralité de canaux de refroidissement (13, 14, 15, 16), le flux d'air frais (FE) se divisant dans lesdits canaux en une pluralité de flux d'air (f1, f2, f3, f4) pour y collecter des calories produites par l'élément chauffant, et ;
• une bouche de sortie (12) pour la sortie d'un flux d'air réchauffé (FS), le flux d'air réchauffé résultant de la fusion de la pluralité de flux d'air après collecte des calories ;
le conduit étant **caractérisé en ce qu'**il comporte, disposés dans la bouche de sortie en regard des sorties des canaux situées, relativement aux autres sorties de canaux, les plus proches de l'ouverture de sortie de la bouche de sortie, des déflecteurs d'air (17, 18) pour s'opposer à la sortie hors des canaux de refroidissement d'au moins un des flux d'air parmi la pluralité, lesdits déflecteur d'air s'étendant sur des longueurs qui diminuent lorsque leurs distances à l'ouverture de la bouche de sortie augmentent, de manière à guider lesdits flux d'air vers l'ouverture de sortie de la bouche de sortie.

2. Conduit (1) de refroidissement selon la revendication 1, **caractérisé en ce que** les déflecteurs (17, 18) sont courbés de telle sorte que leurs courbures s'opposent à la sortie des flux d'air (f1, f2, f3, f4) hors des canaux de refroidissement (13, 14, 15, 16).

3. Conduit (1) de refroidissement selon la revendication 2, **caractérisé en ce que** le rayon de courbure des déflecteurs augmente lorsque leurs distances à l'ouverture de la bouche de sortie (12) augmentent.

4. Pack batterie comportant une pluralité de cellules électrochimiques de stockage d'énergie constituant un élément chauffant, le pack étant **caractérisé en ce qu'**il comporte un conduit selon l'une quelconque des revendications précédentes pour le refroidissement de la pluralité de cellules.

## Patentansprüche

1. Leitung (1) zur Kühlung eines Heizelements, wobei die Leitung umfasst:
• ein Eintrittsmundstück (11) für den Eintritt eines Frischluftstroms (FE);
• mehrere Kühlkanäle (13, 14, 15, 16), wobei sich der Frischluftstrom (FE) in den Kanälen in mehrere Luftströme (f1, f2, f3, f4) aufteilt, um hier Wärme aufzunehmen, die von dem Heizelement erzeugt wird; und
• ein Austrittsmundstück (12) für den Austritt eines erwärmten Luftstroms (FS), wobei der erwärmte Luftstrom aus der Vereinigung der mehreren Luftströme nach Aufnahme der Wärme resultiert;
wobei die Leitung **dadurch gekennzeichnet ist, dass** sie in dem Austrittsmundstück gegenüber den Ausgängen der Kanäle, die sich, in Bezug auf die anderen Ausgänge von Kanälen, der Austrittsöffnung des Austrittsmundstücks am nächsten befinden, angeordnete Luftleitelemente (17, 18) aufweist, um dem Austritt wenigstens eines von den mehreren Luftströmen aus den Kühlkanälen Widerstand entgegenzusetzen, wobei sich die Luftleitelemente über Längen erstrecken, die sich mit zunehmendem Abstand derselben von der Öffnung des Austrittsmundstücks verringern, so dass die Luftströme zu der Austrittsöffnung des Austrittsmundstücks hin geleitet werden.

2. Leitung (1) zur Kühlung nach Anspruch 1, **dadurch gekennzeichnet, dass** die Leitelemente (17, 18) derart gekrümmt sind, dass ihre Krümmungen dem Austritt der Luftströme (f1, f2, f3, f4) aus den Kühlkanälen (13, 14, 15, 16) Widerstand entgegensetzen.

3. Leitung (1) zur Kühlung nach Anspruch 2, **dadurch gekennzeichnet, dass** sich der Krümmungsradius der Leitelemente mit zunehmendem Abstand derselben von der Öffnung des Austrittsmundstücks (12) vergrößert.

4. Batteriepack, welches mehrere elektrochemische Zellen zur Energiespeicherung aufweist, die ein Heizelement bilden, wobei das Pack **dadurch gekennzeichnet ist, dass** es eine Leitung nach einem der vorhergehenden Ansprüche zur Kühlung der mehreren Zellen aufweist.

## Claims

1. Conduit (1) for cooling a heating element, the conduit comprising:
- an inlet mouth (11) for the entry of a fresh air flow (FE);
- a plurality of cooling channels (13, 14, 15, 16), the fresh air flow (FE) dividing between said channels into a plurality of air flows (f1, f2, f3, f4) to collect there heat produced by the heating element; and
- an outlet mouth (12) for the exit of a heated air flow (FS), the heated air flow resulting from the merger of the plurality of air flows after the collection of heat;
the conduit being **characterized in that** it comprises air deflectors (17, 18) arranged in the outlet mouth facing the channel outlets situated closest to the exit opening of the outlet mouth relative to the other channel outlets, for preventing the exit from the cooling channels of at least one of the air flows of the plurality, said air deflectors extending over lengths which reduce as their distances from the opening of the outlet mouth increase, so as to guide said air flows towards the exit opening of the outlet mouth.

2. Cooling conduit (1) according to Claim 1, **characterized in that** the deflectors (17, 18) are curved such that their curvatures prevent the exit of the air flows (f1, f2, f3, f4) from the cooling channels (13, 14, 15, 16).

3. Cooling conduit (1) according to Claim 2, **characterized in that** the radius of curvature of the deflectors increases as their distances from the opening of the outlet mouth (12) increase.

4. Battery pack comprising a plurality of electrochemical energy storage cells constituting a heating element, the pack being **characterized in that** it comprises a conduit according to any of the preceding claims for cooling the plurality of cells.
